# EUROPÄISCHE PATENTSCHRIFT

(11) **EP 2 478 192 B1**
(45) Veröffentlichungstag und Bekanntmachung des Hinweises auf die Patenterteilung: **10.07.2013**
(21) Anmeldenummer: 09771331.7
(22) Anmeldetag: 08.12.2009
(51) Int. Cl.: F01M 13/04, F01L 1/047

(54) **VORRICHTUNG ZUR VARIABLEN EINSTELLUNG DER STEUERZEITEN VON GASWECHSELVENTILEN EINER BRENNKRAFTMASCHINE**
DEVICE FOR VARIABLY ADJUSTING THE CONTROL TIMES OF GAS EXCHANGE VALVES OF AN INTERNAL COMBUSTION ENGINE
DISPOSITIF PERMETTANT LE RÉGLAGE VARIABLE DES TEMPS DE COMMANDE DE SOUPAPES D'ÉCHANGE GAZEUX DANS UN MOTEUR À COMBUSTION INTERNE

(30) Priorität: 18.09.2009 DE 102009042228
(43) Veröffentlichungstag der Anmeldung: 25.07.2012
(73) Patentinhaber: Schaeffler Technologies AG & Co. KG, 91074 Herzogenaurach (DE)
(72) Erfinder: ARNOLD, Mario, 91086 Aurachtal (DE)
(86) Internationale Anmeldenummer: PCT/EP2009/066593
(87) Internationale Veröffentlichungsnummer: WO 2011/032610

(56) Entgegenhaltungen:
- WO-A1-03/085238
- DE-A1-102006 036 052
- DE-A1-102007 035 671
- US-A- 5 234 088
- US-A1- 2009 211 549

## Beschreibung

### Gebiet der Erfindung

Die Erfindung betrifft eine Vorrichtung zur variablen Einstellung der Steuerzeiten von Gaswechselventilen einer Brennkraftmaschine mit einem Antriebselement, einem Abtriebselement und mindestens einem Seitendeckel, wobei das Antriebselement in Antriebsverbindung mit einer Kurbelwelle der Brennkraftmaschine bringbar ist, wobei das Abtriebselement in Antriebsverbindung mit einer Nockenwelle der Brennkraftmaschine bringbar ist und schwenkbar zu dem Antriebselement angeordnet ist, wobei der Seitendeckel an einer axialen Seitenfläche des Abtriebselements oder des Antriebselements angeordnet und drehfest mit dem Antriebselement oder dem Abtriebselement verbunden ist, wobei auf der dem An- und dem Abtriebselement abgewandten Seite des Seitendeckels ein Federelement angeordnet ist und wobei der Seitendeckel einen scheibenförmigen Abschnitt aufweist, aus dem mehrere Befestigungselemente in axialer Richtung hervorstehen, die auf der dem Antriebselement abgewandten Seite des Seitendeckels angeordnet sind.

### Hintergrund der Erfindung

In modernen Brennkraftmaschinen werden Vorrichtungen zur variablen Einstellung der Steuerzeiten von Gaswechselventilen eingesetzt, um die Phasenrelation zwischen Kurbelwelle und Nockenwelle in einem definierten Winkelbereich, zwischen einer maximalen Früh- und einer maximalen Spätposition, variabel einstellen zu können. Die Vorrichtung ist in einen Antriebsstrang integriert, über welchen Drehmoment von der Kurbelwelle auf die Nockenwelle übertragen wird. Dieser Antriebsstrang kann beispielsweise als Riemen-, gen wird. Dieser Antriebsstrang kann beispielsweise als Riemen-, Ketten- oder Zahnradtrieb realisiert sein. Darüber hinaus ist die Vorrichtung drehfest mit einer Nockenwelle verbunden und weist eine oder mehrere Druckkammern auf, mittels derer die Phasenrelation zwischen der Kurbelwelle und der Nockenwelle gezielt verändert werden kann.

Eine derartige Vorrichtung ist beispielsweise aus der DE 10 2008 017 688 A1 bekannt. Die Vorrichtung weist ein Antriebselement, ein Abtriebselement und zwei Seitendeckel auf, wobei das Antriebselement in Antriebsverbindung mit einer Kurbelwelle steht und das Abtriebselement drehfest an einer Nockenwelle befestigt ist. Dabei ist das Abtriebselement in einem definierten Winkelintervall schwenkbar zu dem Antriebselement angeordnet. Das Antriebselement, das Abtriebselement und die Seitendeckel begrenzen mehrere Druckkammern, die einen hydraulischen Stellantrieb ausbilden mittels dem die Phasenlage zwischen dem Abtriebselement und dem Antriebselement variabel eingestellt werden kann. Die Seitendeckel sind an den axialen Seitenflächen des Abtriebselements und des Antriebselements angeordnet und mittels Schrauben drehfest mit dem Antriebselement verbunden. Dabei durchgreifen die Schrauben den ersten Seitendeckel und das Antriebselement und greifen in jeweils eine Spannmutter ein, die separat zu dem Seitendeckel gefertigt und unlösbar mit diesem verbunden sind.
Aus der DE 197 08 661 B4 ist eine Vorrichtung mit zwei Seitendeckeln und einem Antriebselement bekannt, wobei die Seitendeckel mittels Schrauben an dem Antriebselement befestigt sind. Dabei durchgreift jede Schraube beide Seitendeckel und das Antriebselement, wobei ein Schraubenkopf an dem eine Seitendeckel anliegt. Darüber hinaus greift jede der Schrauben in eine Spannmutter ein, die an einer axialen Seitenfläche des anderen Seitendeckels anliegt.
Aus der DE 10 2005 024 241 A1 ist eine weitere Vorrichtung bekannt, deren Seitendeckel einteilig mit diesem ausgebildete Gewindeträger aufweist, die in axialer Richtung über einen scheibenförmigen Abschnitt des Seitendeckels hervorstehen.

### Aufgabe der Erfindung

Der vorliegenden Erfindung liegt die Aufgabe zugrunde, eine zuverlässige Vorrichtung mit geringem Herstellungsaufwand und geringen Herstellungskosten anzugeben.

### Zusammenfassung der Erfindung

Die Aufgabe wird erfindungsgemäß dadurch gelöst, dass zwischen dem Federelement und dem scheibenförmigen Abschnitt des Seitendeckels ein separates Abstandselement angeordnet ist, das ein Eintauchen des Federelements in den Bereich zwischen den Befestigungselementen verhindert.
Die Vorrichtung weist ein Antriebselement und ein Abtriebselement auf, wobei das Antriebselement von einer Kurbelwelle der Brennkraftmaschine angetrieben wird und das Abtriebselement eine Nockenwelle der Brennkraftmaschine antreibt. Das Antriebselement kann beispielsweise mittels eines Zugmittel - oder Zahnradtriebs in Antriebsverbindung mit der Kurbelwelle stehen. Das Abtriebselement kann beispielsweise drehfest mit der Nockenwelle verbunden sein. Des Weiteren ist ein Stellantrieb, beispielsweise ein hydraulischer Stellantrieb mit zumindest zwei gegeneinander wirkenden Druckkammern, vorgesehen, mittels dem das Abtriebselement in einem definierten Winkelbereich relativ zu dem Antriebselement verschwenkt werden kann. Somit ist eine Phasenrelation zwischen dem Abtriebselement und dem Antriebselement variabel einstellbar. An einer axialen Seitenfläche des Antriebselements und / oder des Abtriebselements ist ein Seitendeckel vorgesehen der drehfest mit einem dieser Bauteile verbunden ist. Dabei weist der Seitendeckel einen scheibenförmigen Abschnitt, gegebenenfalls mit einer zentralen Öffnung, auf, der beispielsweise die Druckkammern in axialer Richtung abdichtet. Darüber hinaus ragen aus der dem Abtriebselement bzw. dem Antriebselement abgewandten axialen Seitenfläche des Seitendeckels Befestigungselemente in axialer Richtung heraus. Dabei kann es sich beispielsweise um Schraubenköpfe von Schrauben oder um Spannmuttern handeln, in die die Schrauben eingreifen. Mittels der Befestigungselemente kann die Verbindung zwischen dem Seitendeckel und dem Abtriebselement bzw. dem Antriebselement hergestellt werden. Im Falle von Spannmuttern können diese vor der Montage des Seitendeckels fest mit dem scheibenförmigen Abschnitt verbunden sein oder als separates Bauteil vorliegen. Ebenso denkbar sind Ausführungsformen, in denen die Befestigungselemente einteilig mit dem scheibenförmigen Abschnitt ausgebildet sind, beispielsweise als zylindrische Krägen, welche mit einem Innengewinde versehen sind.
Den Befestigungselementen vorgelagert ist ein Federelement vorgesehen, welches beispielsweise als Schraubenfeder, insbesondere als Spiralfeder, ausgebildet ist, und einerseits an dem Abtriebselement und andererseits an dem Antriebselement angreift. Mittels des Federelements wird das Abtriebselement relativ zu dem Antriebselement mit einem Drehmoment beaufschlagt, welches beispielsweise zur Kompensation von Reibungsverlusten oder zum Erreichen einer Basisposition bei ungenügender Druckmittelbeaufschlagung genutzt werden kann.
Wird das Federelement während des Betriebs der Brennkraftmaschine zu axialen Schwingungen angeregt, so besteht die Gefahr, dass das Federelement oder eine Windung des Federelements in den Bereich zwischen den Befestigungselementen eintaucht und dort verklemmt, wodurch die Funktion des Federelements außer Kraft gesetzt wird oder das Federelement geschädigt wird. Um dies zu verhindern, ist ein Abstandselement vorgesehen, welches separat zu dem Seitendeckel gefertigt ist und zwischen dem Federelement und dem scheibenförmigen Abschnitt des Seitendeckels angeordnet ist. Dabei ist das Abstandselement derart ausgebildet und angeordnet, dass dieses ein Eintauchen des Federelements in den Bereich zwischen den Befestigungselementen verhindert. Beispielsweise kann das Abstandselement aus Kunststoff bestehen und beispielsweise zwischen zumindest zwei Befestigungselementen angeordnet sein. Dabei kann sich das Abstandselement beispielsweise in Umfangsrichtung des scheibenförmigen Abschnitts des Seitendeckels erstrecken.
Wird das Federelement zu axialen Schwingungen angeregt, so trifft es auf das Abstandselement, wodurch die Schwingungsamplituden verringert werden. Somit sinken die auf das Federelement wirkenden Schwingungsbelastungen. Des Weiteren werden die Schwingungen gedämpft.

Vorteilhafterweise kann die Befestigung des Abstandselements an dem Seitendeckel mittels einer Klemmverbindung zwischen zumindest zwei Befestigungselementen realisiert sein. Dies kann beispielsweise dadurch realisiert werden, dass das Abstandselement elastisch verformbar ausgebildet ist und Ausnehmungen aufweist, die den Befestigungselementen angepasst sind. Somit sind keine weiteren Befestigungsstrukturen an dem Seitendeckel auszubilden.

In einer Konkretisierung der Erfindung wird vorgeschlagen, dass das Abstandselement die Befestigungselemente in axialer Richtung zumindest bereichsweise überragt oder bündig mit diesen abschließt. Somit wird verhindert, dass das Federelement an den Befestigungselementen anschlägt, wodurch der Verschleiß verringert wird. In einer Konkretisierung der Erfindung weist das Abstandselement einen Grundkörper und aus dem Grundkörper herausragende Rippen auf, wobei Rippen die Befestigungselemente in axialer Richtung zumindest bereichsweise überragen oder bündig mit diesen abschließen. Durch diese Ausbildung wird zum Einen die Flexibilität des Abstandselements erhöht, wodurch die Montage vereinfacht und die Klemmkraft erhöht wird. Des Weiteren sinkt der Materialeinsatz bei der Herstellung des Abstandselements.

### Kurze Beschreibung der Zeichnungen

Weitere Merkmale der Erfindung ergeben sich aus der nachfolgenden Beschreibung und aus den Zeichnungen in denen ein Ausführungsbeispiel der Erfindung vereinfacht dargestellt ist. Es zeigen:
- Figur 1: nur sehr schematisch eine Brennkraftmaschine,
- Figur 2: einen Längsschnitt durch eine erfindungsgemäßen Vorrichtung zur variablen Einstellung der Steuerzeiten von Gaswechselventilen einer Brennkraftmaschine,
- Figur 3: einen Draufsicht auf die Vorrichtung aus Figur 2,
- Figur 4: eine perspektivische Teildarstellung der Vorrichtung, wobei nur der Seitendeckel dargestellt ist.

### Ausführliche Beschreibung der Zeichnungen

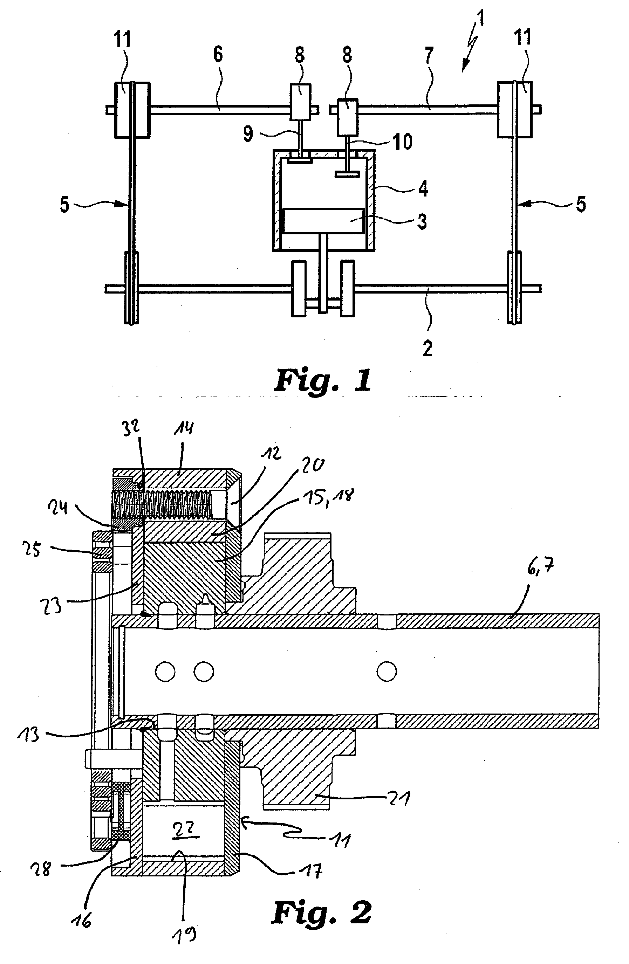

In Figur 1 ist schematisch eine Brennkraftmaschine 1 skizziert, wobei ein auf einer Kurbelwelle 2 sitzender Kolben 3 in einem Zylinder 4 angedeutet ist. Die Kurbelwelle 2 steht in der dargestellten Ausführungsform über je einen Zugmitteltrieb 5 mit einer Einlassnockenwelle 6 bzw. Auslassnockenwelle 7 in Verbindung, wobei eine erste und eine zweite Vorrichtung 11 zur variablen Einstellung der Steuerzeiten von Gaswechselventilen 9, 10 für eine Relativdrehung zwischen Kurbelwelle 2 und den Nockenwellen 6, 7 sorgen können. Nocken 8 der Nockenwellen 6, 7 betätigen ein oder mehrere Einlassgaswechselventile 9 bzw. ein oder mehrere Auslassgaswechselventile 10.

Figur 2 zeigt eine erfindungsgemäße Vorrichtung 11 im Längsschnitt. Derartige Vorrichtungen 11 sind beispielsweise aus der DE 10 2008 017 688 A1 bekannt. Die Vorrichtung 11 weist ein Antriebselement 14, ein Abtriebselement 15 und zwei Seitendeckel 16, 17 auf, die an axialen Seitenflächen des Antriebselements 14 angeordnet und mittels Schrauben 12 an diesem befestigt sind. Das Abtriebselement 15 kann beispielsweise in Form eines Flügelrades ausgeführt sein und weist ein im Wesentlichen zylindrisch ausgeführtes Nabenelement 18 auf, von dessen äußerer zylindrischer Mantelfläche sich Flügel in radialer Richtung nach außen erstrecken.
Ausgehend von einer äußeren Umfangswand 19 des Antriebselements 14 erstrecken sich Vorsprünge 20 radial nach innen. In der dargestellten Ausführungsform sind die Vorsprünge 20 einteilig mit der Umfangswand 19 ausgebildet. Das Antriebselement 14 ist mittels radial innen liegender Umfangswände der Vorsprünge 20 relativ zu dem Abtriebselement 15 drehbar auf diesem gelagert.

Dem Antriebselement 14 und dem zweiten Seitendeckel 17 vorgelagert, ist ein Kettenrad 21 angeordnet, das drehfest mit dem zweiten Seitendeckel 17 verbunden ist und über das mittels eines nicht dargestellten Kettentriebs Drehmoment von der Kurbelwelle 2 auf das Antriebselement 14 übertragen werden kann. Das Abtriebselement 15 weist eine Zentralöffnung 13 auf, die von der Nockenwelle 6,7 durchgriffen wird. Dabei ist das Abtriebselement 15 mittels einer Schweißverbindung mit der Nockenwelle 6, 7 drehfest verbunden.

Innerhalb der Vorrichtung 11 ist zwischen jeweils zwei in Umfangsrichtung benachbarten Vorsprüngen 20 ein Druckraum 22 ausgebildet. Jeder der Druckräume 22 wird in Umfangsrichtung von benachbarten Vorsprünge 20, in axialer Richtung von den Seitendeckeln 16, 17, radial nach innen von dem Nabenelement 18 und radial nach außen von der Umfangswand 19 begrenzt. In jeden der Druckräume 22 ragt ein Flügel, wobei die Flügel sowohl an den Seitendeckeln 16, 17, als auch an der Umfangswand 19 anliegen. Jeder Flügel teilt somit den jeweiligen Druckraum 22 in zwei gegeneinander wirkende Druckkammern.
Durch Druckbeaufschlagung einer Gruppe von Druckkammern und Druckentlastung der anderen Gruppe kann die Phasenlage des Antriebselements 14 zum Abtriebselement 15 und damit die Phasenlage der Nockenwelle 6, 7 zur Kurbelwelle 2 variiert werden. Durch Druckbeaufschlagung beider Gruppen von Druckkammern kann die Phasenlage konstant gehalten werden.

Der erste Seitendeckel 16 weist einen scheibenförmigen Abschnitt 23 und vier Befestigungselemente 24 auf. Die Befestigungselemente 24 sind in Form von Spannmuttern ausgeführt, die formschlüssig in Öffnungen 32 des scheibenförmigen Abschnitts 23 befestigt sind. Dabei ragen die Spannmuttern 24 in axialer Richtung aus der dem Antriebselement 14 abgewandten Seitenfläche des scheibenförmigen Abschnitts 23 heraus. Die Spannmuttern 24 sind jeweils mit einem Innengewinde versehen, in das die Schrauben 12 derart eingreifen, dass die drehfeste Verbindung zwischen den Seitendeckel 16, 17 und dem Antriebselement 14 hergestellt ist. Dabei ragen zwei der vier Schrauben 12 in axialer Richtung aus der jeweiligen Spannmutter 24 heraus. Die Länge der anderen Schrauben 12 ist derart gewählt, dass diese im montierten Zustand nicht aus den Spannmuttern 24 herausragen.

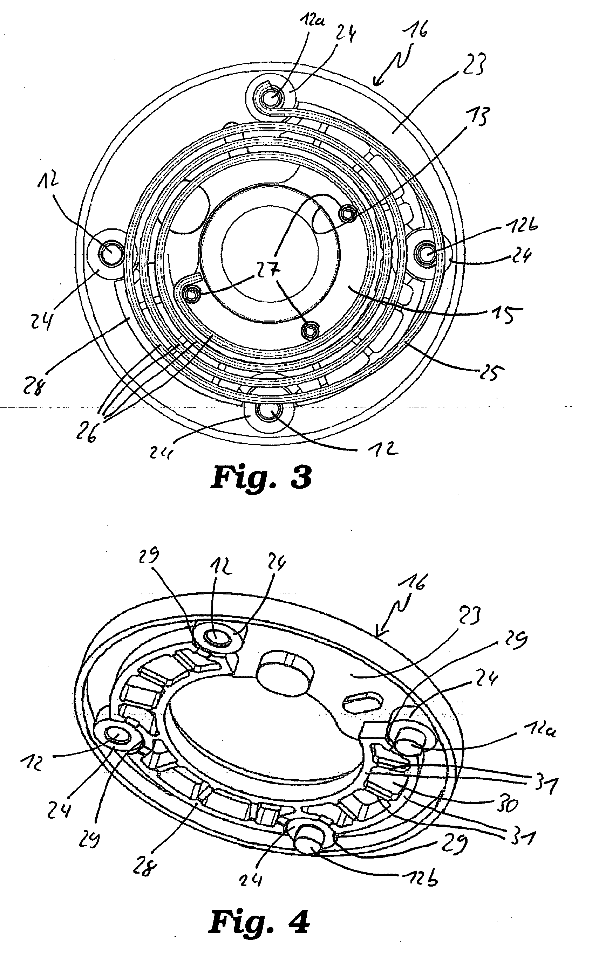

Den Spannmuttern 24 vorgelagert, ist ein vorgespanntes Federelement 25 in Form einer Spiralfeder vorgesehen. Die Spiralfeder weist mehrere konzentrische Federwindungen 26 unterschiedlichen Durchmessers auf. Dabei greift ein Ende der äußersten Federwindung 26 an dem aus der Spannmutter 24 herausragenden Bereich der ersten Schraube 12a an (Figur 3). Im weiteren Verlauf wird die äußerste Federwindung 26 von dem aus der Spannmutter 24 herausragenden Bereich der zweiten Schraube 12b radial abgestützt. Ein Ende der innersten Federwindung 26 greift an einem aus dem Abtriebselement 15 herausragenden Stift 27 an. Gleichzeitig wird die innerste Federwindung 26 an zwei weiteren aus dem Abtriebselement 15 herausragenden Stiften 27 radial nach innen abgestützt. Somit ist das vorgespannte Federelement 25 sowohl mit dem Antriebselement 14 als auch mit dem Abtriebselement 15 derart verbunden, dass ein Drehmoment zwischen diesen Bauteilen vermittelt wird. Dieses kann beispielsweise dazu dienen das Abtriebselement 15 bei ungenügender Druckmittelversorgung der Vorrichtung 11 in eine Basisposition zu verstellen oder unterschiedliche Verstellgeschwindigkeiten in Richtung früher bzw. später Steuerzeiten der Gaswechselventile 9, 10 anzugleichen.

Während des Betriebs der Brennkraftmaschine 1 wird das Federelement 25 zu axialen und radialen Schwingungen angeregt, wodurch einzelne Federwindungen 26 in den Bereich zwischen den Befestigungselementen 24 eintauchen können. Neben einer Erhöhung der Reibung, besteht die Gefahr, dass die eintauchende Federwindung 26 zwischen den Befestigungselementen 24 eingeklemmt wird, wodurch die Funktion der Vorrichtung 11 eingeschränkt wird. Darüber hinaus tritt erhöhter Verschleiß an dem Federelement 25 auf, und es besteht die Gefahr, dass das Federelement 25 auf Grund der erhöhten Belastung bricht.
Um dies zu verhindern ist ein Abstandselement 28 vorgesehen, welches in dem Bereich zwischen den Spannmuttern 24 angeordnet ist. Das Abstandselement 28 ist im Wesentlichen ringförmig ausgebildet, wobei Aussparungen 29 vorgesehen sind, die der äußeren Form der Spannmuttern 24 angepasst sind. Das Abstandselement 28 ist aus einem flexiblen Kunststoff gefertigt, so dass dieses mit Vorspannung zwischen die Spannmuttern 24 eingelegt und mit diesen verklemmt werden kann. Somit ist das Abstandselement 28 verliersicher aber trotzdem zerstörungsfrei demontierbar mit dem ersten Seitendeckel 16 verbunden.
Das Abstandselement 28 weist einen Grundkörper 30 geringer axialer Ausdehnung und mehrere radial bzw. in Umfangsrichtung verlaufenden. Rippen 31 auf, wobei die Rippen 31 die offenen Enden der Spannmuttern 24 in axialer Richtung überragen. Durch eine derartige Ausbildung des Abstandselements 28 wird zum einen der Materialeinsatz gering gehalten. Des Weiteren erhält das Abstandselement 28 die für dessen Montage benötigte Elastizität.
Werden die Federwindungen 26 des Federelements 25 während des Betriebs der Brennkraftmaschine 1 zu axialen Schwingungen angeregt, verhindert das Abstandselement 28, dass die Federwindungen 26 in den Bereich zwischen den Spannmuttern 24 eintreten. Darüber hinaus wird die Schwingungsamplitude verringert und die Schwingung gedämpft. Somit wird eine Beschädigung des Federelements 25 verhindert und die durch die Schwingungen hervorgerufene Belastung verringert. Der Kunststoff des Abstandselements 28 kann zur Minimierung der Reibung mit reibungsmindernden Partikeln, beispielsweise Teflonpartikeln, versetzt sein. Zusätzlich oder alternativ können faserverstärkte Kunststoffe zum Einsatz kommen.

**Bezugszeichen**

| | |
|---|---|
| 1 | Brennkraftmaschine |
| 2 | Kurbelwelle |
| 3 | Kolben |
| 4 | Zylinder |
| 5 | Zugmitteltrieb |
| 6 | Einlassnockenwelle |
| 7 | Auslassnockenwelle |
| 8 | Nocken |
| 9 | Einlassgaswechselventil |
| 10 | Auslassgaswechselventil |
| 11 | Vorrichtung |
| 12 | Schraube |
| 13 | Zentralöffnung |
| 14 | Antriebselement |
| 15 | Abtriebselement |
| 16 | Seitendeckel |
| 17 | Seitendeckel |
| 18 | Nabenelement |
| 19 | Umfangswand |
| 20 | Vorsprung |
| 21 | Kettenrad |
| 22 | Druckraum |
| 23 | scheibenförmiger Abschnitt |
| 24 | Befestigungselement |
| 25 | Federelement |
| 26 | Federwindung |
| 27 | Stift |
| 28 | Abstandselement |
| 29 | Aussparung |
| 30 | Grundkörper |
| 31 | Rippe |
| 32 | Öffnungen |

## Patentansprüche

1. Vorrichtung (11) zur variablen Einstellung der Steuerzeiten von Gaswechselventilen (9, 10) einer Brennkraftmaschine (1) mit
- einem Antriebselement (14), einem Abtriebselement (15) und mindestens einem Seitendeckel (16),
- wobei das Antriebselement (14) in Antriebsverbindung mit einer Kurbelwelle (2) der Brennkraftmaschine (1) bringbar ist,
- wobei das Abtriebselement (15) in Antriebsverbindung mit einer Nockenwelle (6, 7) der Brennkraftmaschine (1) bringbar ist und schwenkbar zu dem Antriebselement (14) angeordnet ist,
- wobei der Seitendeckel (16) an einer axialen Seitenfläche des Abtriebselements (15) oder des Antriebselements (14) angeordnet und drehfest mit dem Antriebselement (14) oder dem Abtriebselement (15) verbunden ist,
- wobei auf der dem An- und dem Abtriebselement (14, 15) abgewandten Seite des Seitendeckels ein Federelement (25) angeordnet ist und
- wobei der Seitendeckel (16) einen scheibenförmigen Abschnitt (23) aufweist, aus dem mehrere Befestigungselemente (24) in axialer Richtung hervorstehen, die auf der dem Antriebselement (14) abgewandten Seite des Seitendeckels (16) angeordnet sind **dadurch gekennzeichnet, dass**
- zwischen dem Federelement (25) und dem scheibenförmigen Abschnitt (23) des Seitendeckels (16) ein separates Abstandselement (28) angeordnet ist, das ein Eintauchen des Federelements (25) in den Bereich zwischen den Befestigungselementen (24) verhindert.

2. Vorrichtung (11) nach Anspruch 1, **dadurch gekennzeichnet, dass** das Abstandselement (28) zwischen zumindest zwei Befestigungselementen (24) angeordnet ist.

3. Vorrichtung (11) nach Anspruch 1, **dadurch gekennzeichnet, dass** sich das Abstandselement (28) in Umfangsrichtung des scheibenförmigen Abschnitts (23) des Seitendeckels (16) erstreckt.

4. Vorrichtung (11) nach Anspruch 1, **dadurch gekennzeichnet, dass** die Befestigung des Abstandselements (28) an dem Seitendeckel (16) mittels einer Klemmverbindung zwischen zumindest zwei Befestigungselementen (24) realisiert ist.

5. Vorrichtung (11) nach Anspruch 1, **dadurch gekennzeichnet, dass** das Abstandselement (28) die Befestigungselemente (24) in axialer Richtung zumindest bereichsweise überragt oder bündig mit diesen abschließt.

6. Vorrichtung (11) nach Anspruch 5, **dadurch gekennzeichnet, dass** das Abstandselement (28) einen Grundkörper (30) und aus dem Grundkörper (30) herausragende Rippen (31) aufweist, wobei Rippen (31) die Befestigungselemente (24) in axialer Richtung zumindest bereichsweise überragen oder bündig mit diesen abschließen.

7. Vorrichtung (11) nach Anspruch 1, **dadurch gekennzeichnet, dass** das Abstandselement (28) aus einem Kunststoff besteht.

## Claims

1. Device (11) for the variable adjustment of the timing of gas exchange valves (9, 10) of an internal combustion engine (1), having
- a drive input element (14), a drive output element (15) and at least one side cover (16),
- wherein the drive input element (14) can be connected in terms of drive to a crankshaft (2) of the internal combustion engine (1),
- wherein the drive output element (15) can be connected in terms of drive to a camshaft (6, 7) of the internal combustion engine (1) and is arranged so as to be pivotable relative to the drive input element (14),
- wherein the side cover (16) is arranged on an axial side surface of the drive output element (15) or of the drive input element (14) and is rotationally conjointly connected to the drive input element (14) or to the drive output element (15),
- wherein a spring element (25) is arranged on that side of the side cover which faces away from the drive input and the drive output element (14, 15), and
- wherein the side cover (16) has a disc-shaped portion (23) from which a plurality of fastening elements (24) project in an axial direction, said fastening elements being arranged on that side of the side cover (16) which faces away from the drive input element (14), **characterized in that**
- a separate spacer element (28) is arranged between the spring element (25) and the disc-shaped portion (23) of the side cover (16), which spacer element prevents the spring element (25) from protruding into the region between the fastening elements (24).

2. Device (11) according to Claim 1, **characterized in that** the spacer element (28) is arranged between at least two fastening elements (24).

3. Device (11) according to Claim 1, **characterized in that** the spacer element (28) extends in the circumferential direction of the disc-shaped portion (23) of the side cover (16).

4. Device (11) according to Claim 1, **characterized in that** the fastening of the spacer element (28) to the side cover (16) is realised by means of a clamping connection between at least two fastening elements (24).

5. Device (11) according to Claim 1, **characterized in that** the spacer element (28) projects beyond the fastening elements (24) in the axial direction at least in regions or terminates flush with said fastening elements.

6. Device (11) according to Claim 5, **characterized in that** the spacer element (28) has a main body (30) and ribs (31) which project out of the main body (30), wherein ribs (31) project beyond the fastening elements (24) in the axial direction at least in regions or terminate flush with said fastening elements.

7. Device (11) according to Claim 1, **characterized in that** the spacer element (28) is composed of a plastic.

## Revendications

1. Dispositif (11) pour l'ajustement variable des temps de commande de soupapes d'échange de gaz (9, 10) dans un moteur à combustion interne (1), comprenant :
- un élément d'entraînement (14), un élément de sortie (15) et au moins un couvercle latéral (16),
- l'élément d'entraînement (14) pouvant être amené en liaison d'entraînement avec un vilebrequin (2) du moteur à combustion interne (1),
- l'élément de sortie (15) pouvant être amené en liaison d'entraînement avec un arbre à came (6, 7) du moteur à combustion interne (1) et étant disposé de manière à pouvoir pivoter par rapport à l'élément d'entraînement (14),
- le couvercle latéral (16) étant disposé sur une surface latérale axiale de l'élément de sortie (15) ou de l'élément d'entraînement (14) et étant connecté de manière solidaire en rotation à l'élément d'entraînement (14) ou à l'élément de sortie (15),
- un élément de ressort (25) étant disposé sur le côté du couvercle latéral opposé à l'élément d'entraînement et à l'élément de sortie (14, 15) et
- le couvercle latéral (16) présentant une portion en forme de disque (23), depuis laquelle font saillie plusieurs éléments de fixation (24) dans la direction axiale, lesquels sont disposés sur le côté du couvercle latéral (16) opposé à l'élément d'entraînement (14), **caractérisé en ce**
- **qu'**un élément d'espacement séparé (28) est disposé entre l'élément de ressort (25) et la portion en forme de disque (23) du couvercle latéral (16), lequel élément d'espacement empêche que l'élément de ressort (25) ne plonge dans la région entre les éléments de fixation (24).

2. Dispositif (11) selon la revendication 1, **caractérisé en ce que** l'élément d'espacement (28) est disposé entre au moins deux éléments de fixation (24).

3. Dispositif (11) selon la revendication 1, **caractérisé en ce que** l'élément d'espacement (28) s'étend dans la direction périphérique de la portion en forme de disque (23) du couvercle latéral (16).

4. Dispositif (11) selon la revendication 1, **caractérisé en ce que** la fixation de l'élément d'espacement (28) sur le couvercle latéral (16) est réalisée au moyen d'une liaison par serrage entre au moins deux éléments de fixation (24).

5. Dispositif (11) selon la revendication 1, **caractérisé en ce que** l'élément d'espacement (28) dépasse au moins en partie des éléments de fixation (24) dans la direction axiale, ou se termine en affleurement avec ceux-ci.

6. Dispositif (11) selon la revendication 5, **caractérisé en ce que** l'élément d'espacement (28) présente un corps de base (30) et des nervures (31) faisant saillie hors du corps de base (30), les nervures (31) dépassant au moins en partie des éléments de fixation (24) dans la direction axiale ou se terminant en affleurement avec ceux-ci.

7. Dispositif (11) selon la revendication 1, **caractérisé en ce que** l'élément d'espacement (28) est constitué de plastique.
